# EUROPEAN PATENT APPLICATION

(11) **EP 3 051 040 A1**
(43) Date of publication of application: **03.08.2016**
(21) Application number: 15178960.9
(22) Date of filing: 29.07.2015
(51) Int. Cl.: E04H 4/16, A46B 3/00, B25G 3/00, F16B 7/04

(54) **QUICK RELEASE IMPLEMENT**

(30) Priority: 23.01.2015 US 201562107147 P; 21.05.2015 US 201514718570
(71) Applicant: CPA Pool Products, Inc., Blainville, Québec J7C 4G6 (CA)
(72) Inventor: Chalifoux, Gabrielle, Laval, Québec H7L 2N2 (CA)
(74) Representative: Cowley, Catherine Mary

(57) **Abstract**

A quick release handle, that consist of a clip having its apex partially exposed, whereby when a force is applied to the exposed apex, a set of legs are directed to an internal slope formed with the handle which causes the legs to compress and retract associated pins. As a result, the handle may be disconnected from a pole with ease.

## Description

### I. Background

### A. Field of Invention

The present invention generally relates to poles, extension poles and tool handles, and in particular, quick release means of attaching same thereto.

### B. Description of the Related Art

Connecting a pole and or extension pole to a tool or like implement is known. Typically, a tool consists of a handle that is shaped and designed to connect to a pole and or extension pole. In the example of a pool implement, such as a pool skimmer, the skimmer typically has a cylindrical handle extending from the tool with a clip disposed therein that connect to an extension pole.

The clip, commonly referred to as a "v-clip," consists essentially of a set of legs that usually extend symmetrically from an apex, within the same plane, much like the letter 'v.' At the end of each leg is a pin, which extends in from the base of the legs in opposing directions in the same plane. The clip is biased in the 'v' form such that if the ends of the legs and or pins are compelled towards each (i.e., compressed), the clip springs back to its original form when released. In use, pins extend beyond the exterior surface of a handle and provide means to secure a pole, for example, when the pins are aligned with corresponding holes formed through a pole.

Typically, it is common for a user to have less poles and or extension poles than implements. Therefore, it is necessary to remove a tool from a pole. Generally, in order to separate the tool from the pole, the pins are typically compressed by use of finger tips, which force the pins to retract and or escape the holes of the pole, while at the same time pulling apart/separating the handle from the pole. Because the spring of the clip may be particularly indignant, and because the pins are relatively small, finger tips tend to commonly slip off the pins and or cause skin to be cinched. Additionally, by virtue of finger placement and or applied compression, sometimes pins are retracted unevenly preventing or hampering the separation of the pole and tool. Ultimately, there is a need for a way to retract pins on a v-clip quickly and safely, without having to directly compress the two pins, so that the pins evenly retract and do not cause injury to a user.

### II. Summary

The instant invention provides for the ability to separate a pole from a handle without directly contacting the pins. The inventor of the instant invention has discovered that a handle may be modified such that there is direct access to the interior locking mechanism (i.e., clip), so that a displacing force may be applied thereto, causing the clip to deform and displace and or disengage a detent, such as a locking pin from a hole, thus allowing for separation.

In an embodiment, the lever portion of a clip is displaced, which may be accomplished by directly contacting the lever through a hole in the handle at an access area. In another embodiment, the locking mechanism may consist of a button in the access area that communicates with the lever or the button may be connected to the clip and whereby the apex and or lever of the clip extend beyond the interior of the handle. It is an embodiment of the invention that the clip consists of one leg. It is a further embodiment of the invention that leg(s) of the clip may be moved, causing the a detent and or pin(s) to displace and or disengage the hole on the handle, allowing for separation. The aforementioned force may include a push, pull or twist action.

In an embodiment, a fulcrum, is disposed inside the handle in proximity to the clip, for example a portion of a leg, such that when a displacing force is applied to clip at or about the lever, the clip deforms by virtue of the leg being directed by the fulcrum, for example which may be a slope or channel, etc. Because the legs provide for direct communication between the lever and the detent, when the leg is moved, so too are its ends, which in this invention includes the movement of the pin disengaging.

### III. Brief Description of the Drawings

The invention may take physical form in certain parts and arrangement of parts, some embodiments of which will be described in the specification and illustrated in accompanying drawings which form a part hereof, wherein, when referring to the drawings, the inventor identifies the following components thereto,
FIG. 1 is a perspective view of an implement according to an embodiment of the invention of a quick release tool.
FIG. 2 is an elevated, right side, perspective view of a portion of a tool handle, with clip in a biased, extended position.
FIG. 3 is a top view of clip, according to the instant invention, in a naturally biased, extended position.
FIG. 4 is a top view of clip, according to the instant invention, in a naturally biased, extended position.
FIG. 5 is an elevated, right side, perspective view of a portion of a tool handle, with clip in compressed, retracted position.
FIG. 6 is a top view of a deformed clip in a compressed, retracted position, according to the instant invention.
FIG. 7 is a top view of a deformed clip in a compressed, retracted position, according to the instant invention.
FIG. 8 is a top plan view of a portion of a tool handle according to the instant invention defining a cut away A-A view to be shown in the following Figures, FIGS. 9 and 10.
FIG. 9 is a top-elevated, perspective view identified by A-A from FIG. 8, wherein the clip is in it biased, extended position.
FIG. 10 is a bottom-elevated, perspective view identified by A-A from FIG. 8, wherein the clip is compressed, retracted position.
FIG. 11 is a top plan view of a portion of a tool handle according to the instant invention defining a cut away D-D view to be shown in the following Figures, FIGS. 12 and 13.
FIG. 12 is a front view identified by D-D from FIG. 11, wherein the clip is in it biased, extended position.
FIG. 13 is a front view identified by D-D from FIG. 11, wherein the clip is compressed, retracted position.

### IV. Detailed Description of the Invention

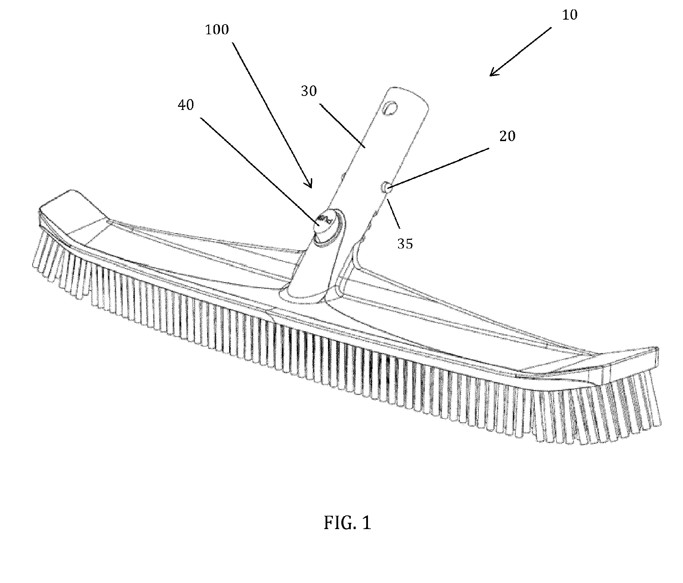

FIG. 1 shows an embodiment of the instant invention wherein the quick release tool 10 is for example, a wall brush for a pool, and comprises a substantially hollow handle **30**, defined by an outer wall surrounding an internal area that houses a clip (which is partially shown, yet defined by button **40** disposed about the access area **100** of the handle **30** and a pin **20** that is engaged with hole **35**). Access area **100** may be anywhere on said handle **30** so long as it provides access to at least the lever portion **40** of a clip **60** such that when lever **40** is displaced, detent **20** disengages as a result of the contact between means disposed in said internal area, such as the interaction between a leg of clip and a fulcrum (not shown).

As should be understood, the exposed pins **20** are detents that lock the quick release tool **10** to other poles such as an extension pole (not shown). This locking means is wellknown in the art and essentially consists of a hollow extension pole surrounding a portion of handle **30** such that pins **20** engage with complimentary holes formed on an extension pole. According to an embodiment of the instant invention, when button **40** is pressed, an internal lever displaces, which causes pins **20** to retract and or disengage, allowing the implement to be easily separated therefrom.

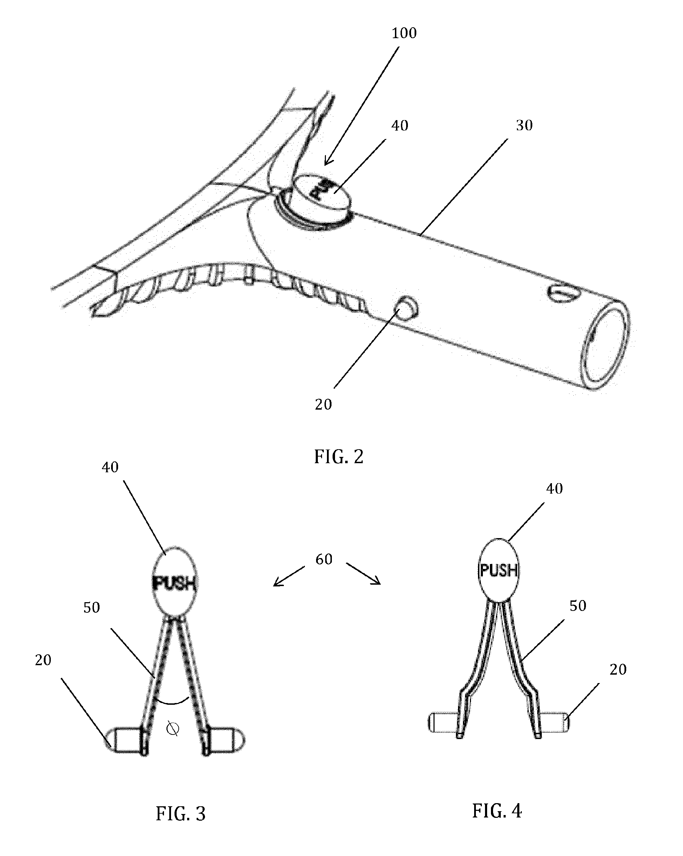

FIG. 2 is an elevated, right side perspective view of a portion of a tool handle **30**, wherein clip **60** is in a biased, extended position. FIGS. 2 and 3 provide two different embodiments of a clip **60** subject to the instant invention that is shown in a naturally extended and or biased position. Essentially, a clip **60** subject to the instant invention has two ends, one that consists of a detent **20** shown in the figures as a pin, and the other end that consists of a lever **40** shown in the figures as a button, and a leg **50** is defined as the portion there between. As shown, the clip **60** may also be defined as having an apex **40** which defines a lever and has a leg **50** extending therefrom at an angle Ø in relation to a second leg **50**. (It is within the scope of the invention that there is only one leg.) Detent, i.e., pin **20** extends from end of leg **50**.

FIG. 2, shows an embodiment of pin **20** in a biased, extended position. As shown, the button, lever and or apex **40** protrudes from the wall of handle **30** at the access area **100**. It is an object of the invention that this apex **40** may be completely hidden and or contained within handle **30**. In an embodiment, when the apex **40** is hidden and or contained completely within the internal area of handle **30** it may be contacted and or displaced when the access area **100** is a hole that provides direct access thereto. It is an alternate embodiment of the invention that the access area **100** is a portion of the wall consisting of deformable material that can depress sufficiently such that the lever **40** within said internal area is still is capable of being accessed and or displaced.

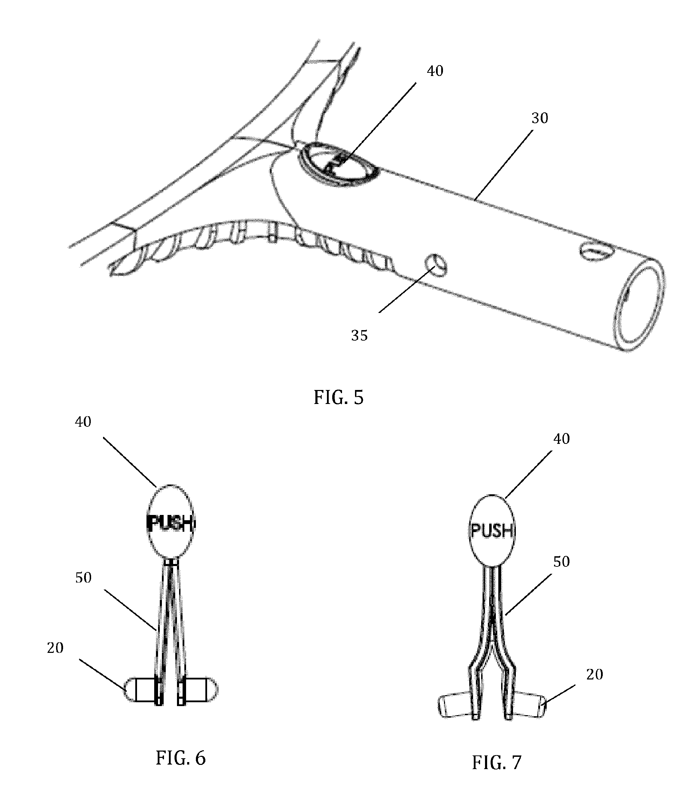

FIG. 5 shows an embodiment of how pin **20** disengages with hole **35** formed on said handle **30**. In an embodiment subject to the instant invention, when button **40** is displaced, as shown pressed down, pins **20** retract from handle **30**, based on means disposed in said internal area. FIGS. 6 and 7 provide two different embodiments of how clip **60** subject to the instant invention may appear when clip **60** is a v-clip compressed and or when pins **20** are in a retracted position.

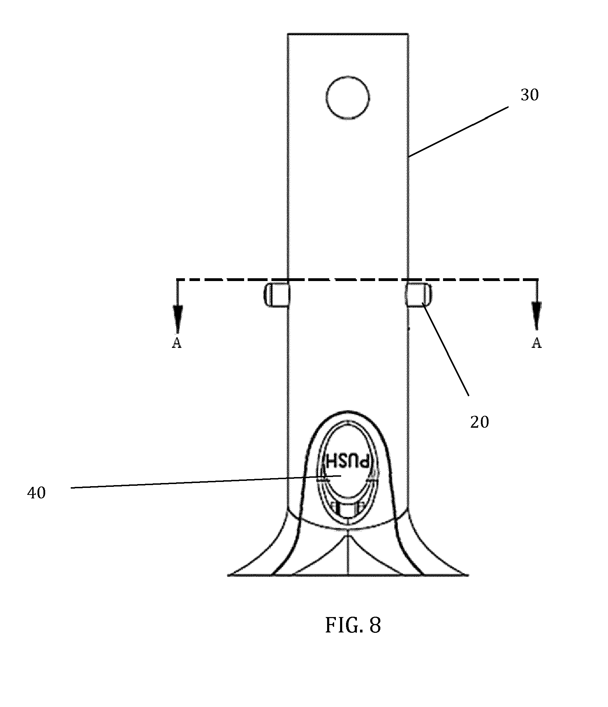

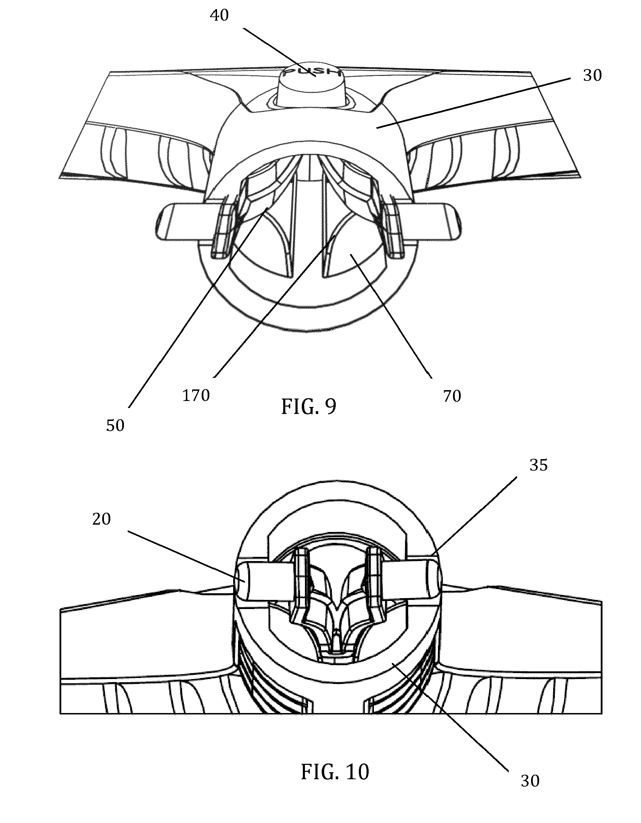

FIG. 8 is a top plan view of a portion of a tool handle **30** according to the instant invention when clip **60** is in a biased, extended position, and identifies a cut away A-A. FIG. 9 provides an inside view of the internal area of handle **30** based on A-A, when clip **20** is in the biased, extended position. As shown, the internal area of handle **30** provides means **70** disposed in said internal area that disengages the detent **20** and hole **30**, according to communications between lever **20** and access area **100**.

In the embodiment as shown, means **70** is a fulcrum that is in contact with leg **50** when detent **20** is disengages with hole **35**. As shown, fulcrum **70** includes a guide defined by slope **170**. As shown, when lever **40** is displaced, such as being pressed down, a portion of leg **50** comes in contact with slope **170** and deforms clip **60**. As shown in the embodiment, clip **60** is compressed. Au cause de deformation, pin **20** retracts and or disengages hole **35**, as shown in FIG. 10.

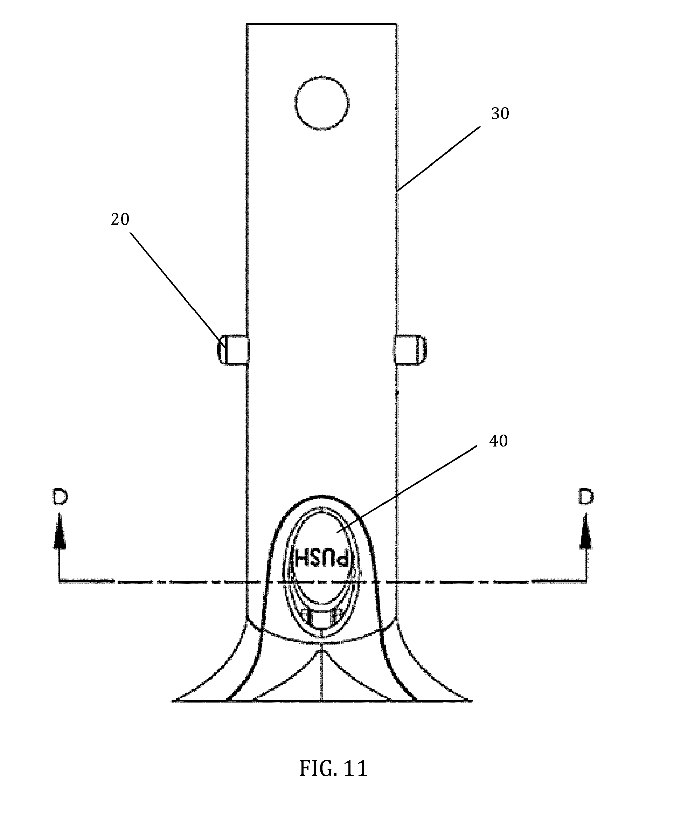

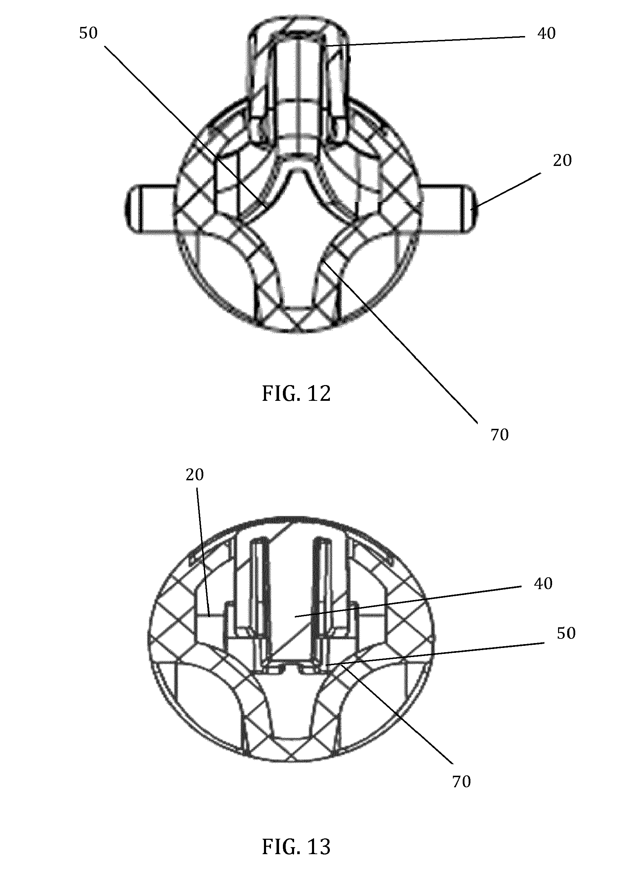

FIG. 11 is a top plan view of a portion of a tool handle according to the instant invention as provided in FIG. 8, and identifies a cut away in direction of D-D (opposite of A-A in FIG. 8). Accordingly, FIG. 12 provides an inside view of handle **30** based on D-D, when clip **60** is in a biased, extended position, and FIG. 13 shows when pins **20** are retracted, (i.e., when button and or apex **40** is pressed down and legs **50** are caused to contact slope **60** and thereby drawn together, causing pins **20** to retract.

While embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A quick release tool comprising,
a handle defined by an outer wall surrounding an internal area, a hole formed through said wall and an access area,
a clip disposed within said internal area, said clip having two ends, one that consists of a detent engaging the hole and the other that consists of a lever that communicates with said access area, a leg defined there between, and means disposed in said internal area that disengages the detent and hole according to said communications.

2. The quick release tool of claim 1 whereby the access area consists of an access hole formed through the wall that supports communication with the lever.

3. The quick release of claim 2 wherein said access hole is filled with a moveable button.

4. The quick release of claim 3 wherein the button is connected to the lever.

5. The quick release of claim 3 or 4 wherein the button is a flexible diaphragm.

6. The quick release tool of any preceding claim whereby the means disposed in said internal area includes a fulcrum.

7. The quick release tool of claim 6 whereby the fulcrum includes a guide.

8. The quick release tool of claim 7 whereby the guide is a slope.

9. The quick release tool of any preceding claim whereby the communication is displacing the lever.

10. The quick release tool of any preceding claim whereby said means disposed in said internal area is in contact with the leg when the detent and hole disengage.

11. A quick release handle comprising,
a clip consisting of a leg that has a pin disposed thereon,
a handle having at least one wall defining an internal area that houses said clip,
a hole formed through said at least one wall, and is shaped and sized to allow a portion of the pin to retract there through,
a grade disposed within said internal area, that directs the leg and causes pin to retract from said hole.

12. The clip according to claim 11, whereby said force is applied to the apex.

13. The clip according to claim 12, whereby the apex extends beyond the internal area of the handle through a corresponding hole formed through the wall thereof.

14. The clip according to claim 12, whereby the apex is accessible within the internal area of the handle by an access hole formed through the wall thereof.
